# EUROPEAN PATENT SPECIFICATION

(11) **EP 3 712 887 B1**
(45) Date of publication and mention of the grant of the patent: **29.09.2021**
(21) Application number: 17932260.7
(22) Date of filing: 17.11.2017
(51) Int. Cl.: G10L 25/51, B60R 16/037, G01C 21/36, G10L 17/00, G10L 15/10, G10L 15/18, G10L 15/08

(54) **VEHICLE OPERATION ASSISTANCE DEVICE**
UNTERSTÜTZUNGSVORRICHTUNG FÜR EIN FAHRZEUG
DISPOSITIF D'ASSISTANCE D'OPÉRATION DE VÉHICULE

(43) Date of publication of application: 23.09.2020
(73) Proprietor: Nissan Motor Co., Ltd., Yokohama-shi, Kanagawa 221-0023 (JP)
(72) Inventor: NISHIYAMA, Jo, Atsugi-shi Kanagawa 243-0123 (JP); INOUE, Hirofumi, Atsugi-shi Kanagawa 243-0123 (JP); TERAGUCHI, Takehito, Atsugi-shi Kanagawa 243-0123 (JP); KASAI, Jun, Atsugi-shi Kanagawa 243-0123 (JP)
(74) Representative: Osha Liang
(86) International application number: PCT/JP2017/041460
(87) International publication number: WO 2019/097674

(56) References cited:
- WO-A1-2007/105436
- WO-A1-2016/121174
- JP-A- 2006 099 195
- JP-A- 2009 232 415
- JP-A- 2012 133 530
- JP-A- 2013 182 560
- JP-A- 2017 009 826
- US-A1- 2011 058 028
- US-A1- 2016 379 643

## Description

### [Technical Field]

The present invention relates to an operation assistance system for vehicles that operates to obtain recommendation information suitable for an occupant composition including human relationships and provide the recommendation information for assisting various vehicle operations performed by one or more occupants.

### [Background Art]

An onboard device is known, which is configured to: collect voices in a vehicle interior; specify seating positions of occupants; estimate a speaker among the occupants present in the vehicle interior on the basis of the collected voices and the specified seating positions; estimate content of conversation on the basis of the collected voices; estimate an occupant composition on the basis of the specified seating positions, the estimated speaker, and the estimated conversation content; estimate action purposes of the occupants on the basis of the estimated conversation content and the estimated occupant composition; and determine a recommended service on the basis of the estimated occupant composition and the estimated action purposes (Patent Document 1). Specifically, the onboard device operates to: identify individuals from voiceprint patterns of the collected voices; specify the owner from the seating positions and boarding frequencies of the individuals who can be identified; specify the relationships with the identified individuals from the collected voices using a conversation keyword; register the relationships as speaker pattern data; and estimate the occupant composition using the registered speaker pattern data.

### [Prior Art Document]

### [Patent Document]

[Patent Document 1] JP2012-133530A

### [Summary of Invention]

### [Problems to be solved by Invention]

In the above prior art, however, data has to be collected several times in order to create highly accurate speaker pattern data, and there is thus a problem in that it takes a considerable time to provide an optimal recommended service (also referred to as recommendation information) to the occupants.

A problem to be solved by the present invention is to provide an operation assistance device for vehicles that operates to obtain recommendation information suitable for an occupant composition including human relationships in a short time and provide the recommendation information for assisting various vehicle operations performed by one or more occupants.

### [Means for solving problems]

An operation assistance system and an operation assistance method for vehicles according to the present invention are defined in the appended independent claim. Specific embodiments are defined in the dependent claims. Such a method includes among other features preliminarily acquiring conversation voice data of a plurality of persons to specify speakers, analyzing the acquired conversation voice data for each of the specified speakers to extract a predetermined keyword, specifying a speech pattern of each of the speakers on the basis of the keyword for each of the speakers, specifying conversation content on the basis of the conversation voice data of the plurality of persons, and quantifying and obtaining direct human relationships among the plurality of persons from the specified speech pattern and the specified conversation content. Then, when the plurality of persons gets on a vehicle, assistance information for a vehicle operation determined to be recommended is determined from the persons and the quantified human relationships. The above problem is thus solved.

### [Effect of Invention]

According to the present invention, information on the human relationships obtained before boarding is used; therefore, the recommendation information suitable for the occupant composition including the human relationships can be obtained in a short time and can be provided in a timely manner for assisting various vehicle operations performed by one or more occupants.

### [Brief Description of Drawings]

FIG. 1 is a block diagram illustrating an operation assistance device for vehicles according to one or more embodiments of the present invention.
FIG. 2A is a flowchart illustrating a processing procedure executed in a conversation group estimation section of FIG. 1.
FIG. 2B is a planar map for describing a combination extraction process of step S22 of FIG. 2A based on speech positions.
FIG. 2C is a time chart for describing a combination extraction process of step S23 of FIG. 2A based on speech periods.
FIG. 3A is a flowchart illustrating a processing procedure executed in a direct human relationship analysis section of FIG. 1.
FIG. 3B is a diagram illustrating a part of a category dictionary used in an analysis process for the category of conversation content in step S33 of FIG. 3A.
FIG. 3C is a graph illustrating an example of analysis results obtained by the analysis process for the category of conversation content in step S33 of FIG. 3A.
FIG. 3D is a diagram illustrating a part of a speech pattern dictionary used in an analysis process for the speech pattern in step S34 of FIG. 3A.
FIG. 3E is a set of graphs each illustrating an example of analysis results obtained by the analysis process for the speech pattern in step S34 of FIG. 3A.
FIG. 4A is a flowchart illustrating a processing procedure executed in an indirect human relationship estimation section of FIG. 1.
FIG. 4B is a diagram illustrating human relationships for describing a statistical process for analysis values of direct human relationships in step S42 of FIG. 4A.
FIG. 4C is a graph illustrating an example of the results obtained by the statistical process for the analysis values of the direct human relationships in step S42 of FIG. 4A.
FIG. 4D is a diagram illustrating human relationships for describing a calculation process for an estimated value of an indirect human relationship in step S44 of FIG. 4A.
FIG. 5 is a flowchart illustrating a processing procedure executed in a vehicle information learning section of FIG. 1.
FIG. 6 is a flowchart illustrating a processing procedure executed in an assistance information determination section of FIG. 1.

### [Mode(s) for Carrying out the Invention]

Hereinafter, one or more embodiments of the present invention will be described with reference to the drawings. The operation assistance device for vehicles 1 according to the present invention operates to obtain recommendation information suitable for an occupant composition including human relationships and provide the recommendation information for assisting various vehicle operations performed by one or more occupants. Although not particularly limited, in an example for facilitating the understanding of the present invention, when the occupants of a vehicle VH1 are composed of an occupant A and an occupant B and both the occupants A and B are in a human relationship between fishing partners, a destination suitable for a fishing spot is displayed as an option or automatically set as the destination on an onboard navigation device, or a radio of a fishing program is displayed as an option or automatically played on an onboard audio device. Additionally or alternatively, when the occupants of a vehicle VH2 are composed of an occupant C and an occupant D and both the occupants C and D are in a human relationship between a boss and a subordinate of the same company, a destination such as a business trip place or a restaurant for lunch is displayed as an option or automatically set as the destination on an onboard navigation device, or a radio of an economic program is displayed as an option or automatically played on an onboard audio device.

As used herein, the term "human relationship" refers to a relationship between a specific person and another specific person determined by the present or past experiences in the social life. Although not particularly limited, in an example for facilitating the understanding of the present invention, human relationships can be classified into relationships among family members such as parents, children, husbands, and wives, relationships among relatives such as cousins, relationships of these families, relatives, and others, relationships among positions in organizations, such as bosses, subordinates, colleagues, classmates, seniors, and juniors in organizations such as companies and schools, relationships among members of the same hobby or entertainment, relationships among boyfriends, girlfriends, lovers, and other friends, and relationships among others. In one or more embodiments of the present invention, the occupant composition of a vehicle means including such human relationships.

Although not particularly limited, in an example for facilitating the understanding of the present invention, the "vehicle operations" as used herein include various operations for a vehicle performed by one or more occupants including the driver, such as a driving operation for a vehicle (such as an accelerator operation, a brake operation, a transmission lever operation, or a steering operation), an operation of a navigation device, an operation of an audio device, an operation of a car air conditioner, and an operation of adjusting a seat position, which are performed by one or more occupants.

As used herein, the "recommendation information suitable for the occupant composition" is instruction information for a vehicle or an onboard device for realizing a highly possible or preferred operation that can be considered from the human relationships among the occupants in the above-described vehicle operations performed by one or more occupants. Although not particularly limited, in an example for facilitating the understanding of the present invention, examples of the recommendation information when the occupants A and B composing the occupants are in a human relationship between fishing partners include instruction information for a destination setting operation on the onboard navigation device and instruction information for a channel selection operation on the audio device.

As used herein, the term "assistance" for vehicle operations encompasses not only presenting options to an occupant when the occupant performs manual operation, but also autonomous (automated) operations performed by the operation assistance device for vehicles 1 without manual operation performed by an occupant. In the case in which the operation assistance device for vehicles 1 operates to autonomously perform a vehicle operation on the basis of the recommendation information, when an occupant has a favorable impression on the recommendation information, the number of vehicle operations to be performed by the occupant can be reduced. When an occupant has a negative impression, the occupant can cancel the autonomous vehicle operation by performing a different manual operation than the autonomous vehicle operation.

Thus, the operation assistance device for vehicles 1 according to one or more embodiments of the present invention operates to obtain recommendation information suitable for an occupant composition including human relationships and provide the recommendation information for assisting various vehicle operations performed by one or more occupants and is characterized by preliminarily obtaining the human relationships by analysis or estimation before boarding, obtaining the recommendation information using the human relationships in a short time after boarding, and providing the recommendation information for assisting the vehicle operations.

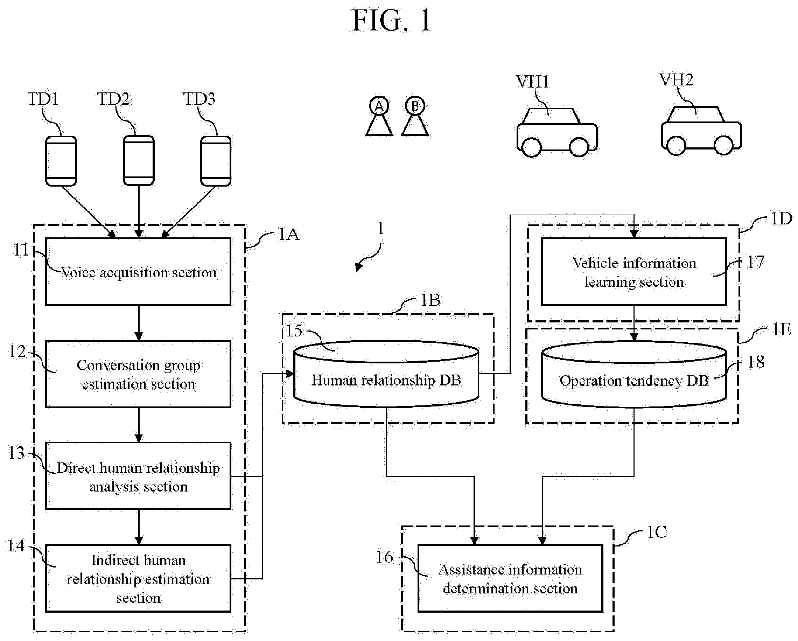

To this end, as illustrated in FIG. 1, the operation assistance device for vehicles 1 according to one or more embodiments of the present invention includes a human relationship analysis unit 1A, a human relationship storage unit 1B, an assistance information determination unit 1C, a vehicle information learning unit ID, and an operation tendency storage unit 1E. The human relationship analysis unit 1A includes a voice acquisition section 11, a conversation group estimation section 12, a direct human relationship analysis section 13, and an indirect human relationship estimation section 14. The human relationship storage unit 1B includes a human relationship database 15. The assistance information determination unit 1C includes an assistance information determination section 16. The vehicle information learning unit 1D includes a vehicle information learning section 17. The operation tendency storage unit 1E includes an operation tendency database 18. In the operation assistance device for vehicles 1 according to one or more embodiments of the present invention, the vehicle information learning unit 1D and the operation tendency storage unit 1E may be omitted as necessary. In this case, the human relationship analysis unit 1A, the human relationship storage unit 1B, and the assistance information determination unit 1C constitute the operation assistance device for vehicles 1.

The operation assistance device for vehicles 1 according to one or more embodiments of the present invention is configured as a computer installed with hardware and software. Specifically, the operation assistance device for vehicles 1 is configured to include a read only memory (ROM) that stores programs, a central processing unit (CPU) that executes the programs stored in the ROM, and a random access memory (RAM) that serves as an accessible storage device. A micro processing unit (MPU), a digital signal processor (DSP), an application specific integrated circuit (ASIC), a field programmable gate array (FPGA), or the like can be used as the operation circuit as substitute for or in addition to the CPU. The above-described human relationship analysis unit 1A, human relationship storage unit 1B, assistance information determination unit 1C, vehicle information learning unit ID, and operation tendency storage unit 1E achieve respective functions, which will be described later, by the software established in the ROM.

First, the operation assistance device for vehicles 1 according to one or more embodiments of the present invention is based on the assumption that a plurality of persons who can be the occupants owns respective terminals TD1, TD2, TD3, ... (also collectively referred to as a "terminal TD" or "terminals TD," hereinafter) that are carried or used on a daily basis. The terminals TD of this type for use include a smartphone, a mobile phone, a detachable onboard device, a vehicle remote control key (such as the Intelligent Key (registered trademark)), and a voice recognition user interface (such as the Amazon Echo Dot (registered trademark)). Each terminal TD according to one or more embodiments of the present invention has a computer function. More specifically, each terminal TD has a microphone for inputting conversation voice data, a communication function for transmitting the input conversation voice data to the human relationship analysis unit 1A of the operation assistance device for vehicles 1 according to one or more embodiments of the present invention, and a position detection function such as the function of a GPS receiver for detecting the current position of the terminal TD. Each terminal TD transmits its own ID, the current position, and the collected conversation voice data to the voice acquisition section 11 of the human relationship analysis unit 1A via a wireless communication network such as the Internet.

As illustrated in FIG. 1, the human relationship analysis unit 1A includes the voice acquisition section 11, the conversation group estimation section 12, the direct human relationship analysis section 13, and the indirect human relationship estimation section 14.

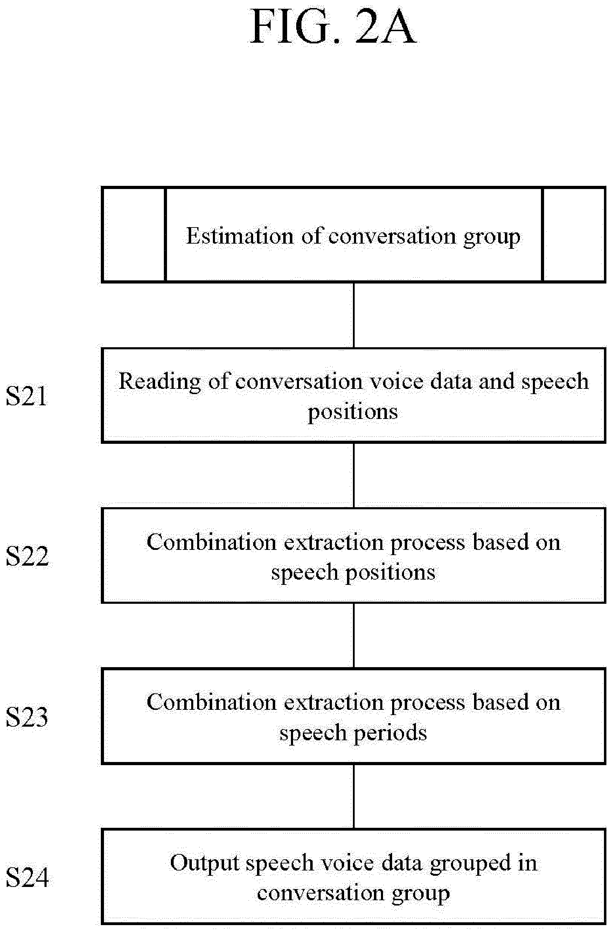

The voice acquisition section 11 operates to execute transmission and reception of information with the above-described plurality of terminals TD via a wireless communication network such as the Internet. In particular, the ID, current position, and collected conversation voice data of each terminal TD are input to the voice acquisition section 11 (step S21 of FIG. 2A).

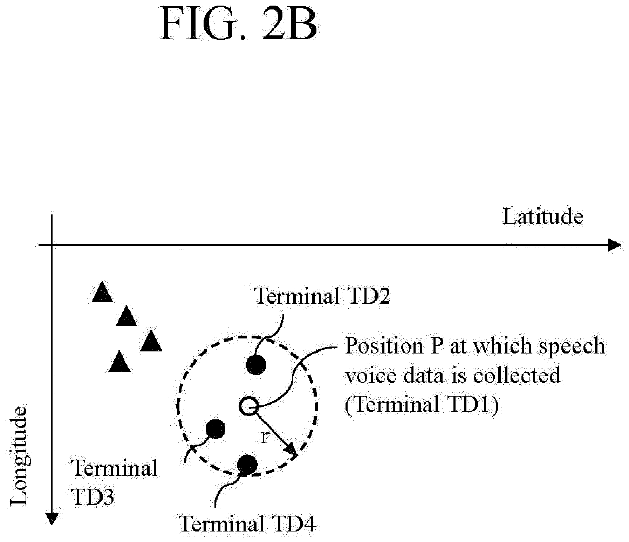

On the basis of the ID, current position, and collected conversation voice data of each terminal TD which are input to the voice acquisition section 11, the conversation group estimation section 12 operates to estimate who are in conversation with whom and a group (cluster) of persons who are in conversation with one another in terms of the conversation voice data which is input to a specific terminal TD. In this operation, the voiceprint data of the owner of each terminal TD (or a specific person associated with each terminal TD, here and hereinafter), which is preliminarily registered, is checked to specify which conversation voice data represents whose voice. For example, FIG. 2B is a planar map (latitude-longitude) for describing a combination extraction process of step S22 of FIG. 2A based on speech positions. As illustrated in FIG. 2B, provided that the conversation voice data is collected by the terminal TD1, the voiceprint data of the owner of each terminal TD is registered in the human relationship database 15 of the operation assistance device for vehicles 1 so as to be associated with the ID, and the conversation voice data collected by the terminal TD1 is then cross-checked with the voiceprint data to specify which 1D the voice of the owner of a terminal TD corresponds to.

The input conversation voice data collected by a terminal TD includes not only the conversation voice data of a plurality of persons who are actually in conversation with one another but also the conversation voice data of persons who are not involved in the conversation. The conversation group estimation section 12 therefore operates to execute a combination extraction process based on the positional information of a terminal TD and a combination extraction process based on speech periods thereby to estimate the persons of a group who are actually in conversation with one another in the conversation voice data which is input to the terminal TD. That is, for a plurality of the conversation voice data that are collected by a terminal TD at the same time, the combination extraction process based on the positional information of the terminal TD is used to extract combinations in which the positional information associated with the collection of voices indicates a distance of a threshold or less, on the basis of the ID, current position, and collected conversation voice data of the terminal TD which are input to the voice acquisition section 11, thereby executing estimation of a provisional conversation group based on the positional information of the terminal TD (step S22 of FIG. 2A).

For example, as illustrated in FIG. 2B, the terminal TD1 which has collected the conversation voice data is located at a position P, and terminals TD (three terminals TD2, TD3, and TD 4 in the figure) existing within a radius r from the position P are highly likely to belong to a conversation group because of short distances; therefore, these terminals are estimated to belong to a provisional conversation group. In contrast, terminals TD (terminals indicated by four triangles in the figure) located at positions beyond the radius r from the position P of the terminal TD1 which has collected the conversation voice data are less likely to belong to the conversation group because of long distances; therefore, these terminals are excluded from the provisional conversation group.

For one or more conversation voice data estimated to belong to the same group which is extracted by the above-described combination extraction process based on the positional information (step S22 of FIG. 2A), the combination extraction process based on the speech periods is used to extract the conversation voice data in which the overlapping ratio or overlapping time of speech periods (time intervals from the start of speech to the end of speech) is not more than a predetermined threshold and estimate the conversation voice data as that of a conversation group in which the conversation is actually performed (step S23 of FIG. 2A).

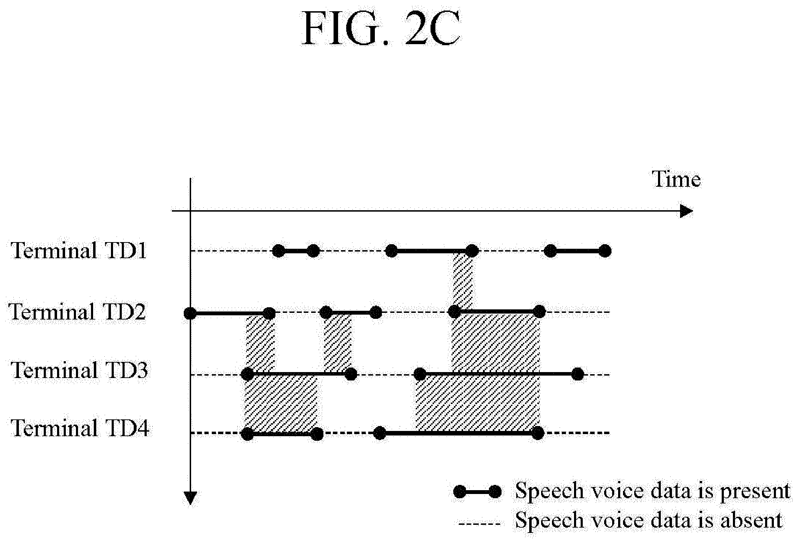

For example, FIG. 2C is a time chart for describing the combination extraction process of step S23 of FIG. 2A based on the speech periods. As illustrated in FIG. 2C, when the speech periods of the conversation voice data of the four terminals TD1, TD2, TD3, and TD4 are indicated by solid lines, the speech periods of the person at the terminal TD2 are almost not overlapped with the speech periods of the person at the terminal TD1, whereas the speech periods of the persons at the terminals TD3 and TD4 have large overlapping ratios with respect to the speech periods of the person at the terminal TD1. The speech periods of the persons at the terminals TD3 and TD4 also have large overlapping ratios with respect to the speech periods of the person at the terminal TD2. Thus, when persons are in conversation with each other, it is reasonable to assume that a large overlapping ratio of speech periods means that a conversation is not established; therefore, the persons at the terminals TD3 and TD4 are estimated not to constitute the same conversation group with the persons at the terminals TD1 and TD2, while the persons at the terminals TD1 and TD2 are estimated to belong to the same conversation group because the speech periods of the persons at the terminals TD1 and TD2 are almost not overlapped with each other (the overlapping ratio or overlapping time of speech periods is not more than the predetermined threshold). The conversation group estimation section 12 operates to specify the conversation voice data of the same conversation group estimated as the above and output the conversation voice data to the direct human relationship analysis section 13 together with the IDs of the terminals TD1 and TD2.

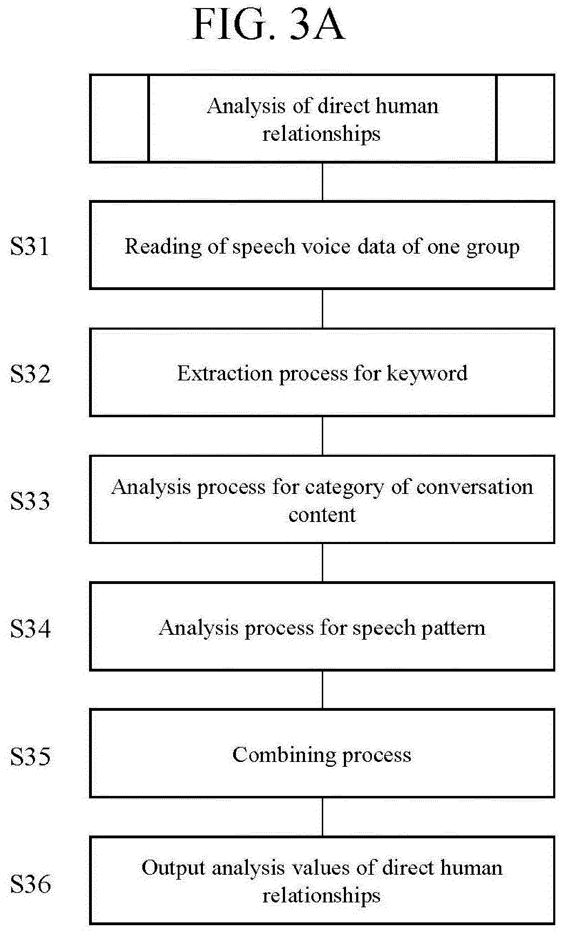

The direct human relationship analysis section 13 is responsible for functions of analyzing the acquired conversation voice data for each of the specified speakers to extract a predetermined keyword, specifying a speech pattern of each of the speakers on the basis of the keyword for each of the speakers, specifying conversation content on the basis of the conversation voice data of a plurality of persons, and analyzing and quantifying direct human relationships among the plurality of persons from the specified speech pattern and the specified conversation content to obtain the direct human relationships. This analysis is executed on the basis of the conversation voice data which belongs to the same conversation group estimated by the above-described conversation group estimation section 12 (step S31 of FIG. 3A). The direct human relationship analysis section 13 according to one or more embodiments of the present invention is implemented with a keyword extraction process (step S32 of FIG. 3A), an analysis process for the category of conversation content (step S33 of FIG. 3A), an analysis process for the speech pattern (step S34 of FIG. 3A), and a combining process (step S35 of FIG. 3A).

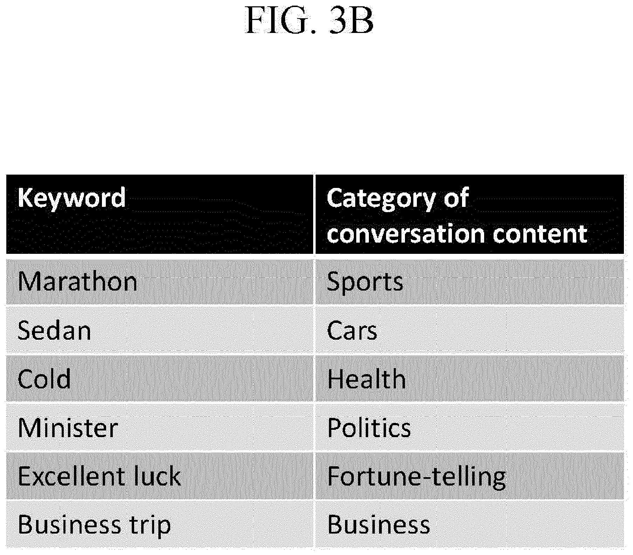

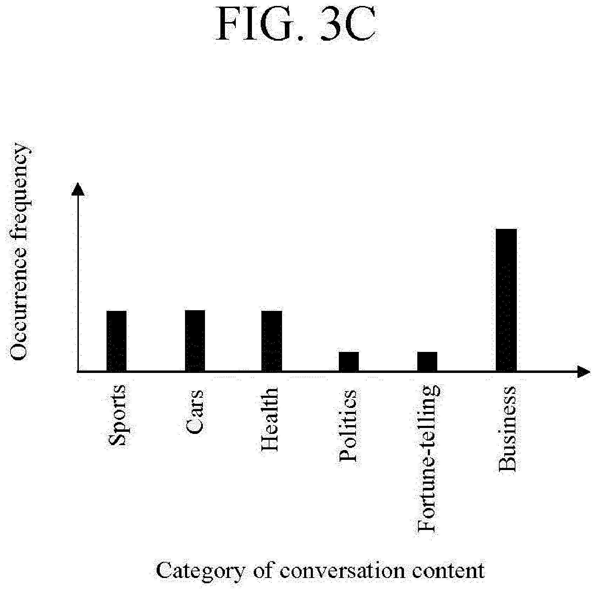

The keyword extraction process is a process of extracting a plurality of keywords (predetermined words), which are preliminarily registered, from the conversation voice data belonging to the same conversation group using a known voice detection process. The analysis process for the category of conversation content is a process of classifying the keywords extracted by the keyword extraction process into categories to which the keywords belong. The keyword extraction process and the analysis process for the category of conversation content are performed by referring to a category dictionary stored in the human relationship database 15. FIG. 3B is a diagram illustrating a part of the category dictionary used in the analysis process for the category of conversation content in step S33 of FIG. 3A. As illustrated in the figure, one category of conversation content is associated with a plurality of keywords. For example, when the conversation voice data includes "marathon," this indicates that conversation classified into "sports" is performed. In the analysis process for the category of conversation content, the occurrence frequency of the category of conversation content associated with the extracted keyword is calculated as illustrated in FIG. 3C. FIG. 3C is a graph illustrating an example of analysis results obtained by the analysis process for the category of conversation content in step S33 of FIG. 3A. In the analysis process for the category of conversation content, the category of conversation content having a large occurrence frequency illustrated in the figure is specified, and the specified category of conversation content is used for the combining process in step S35 of FIG. 3A.

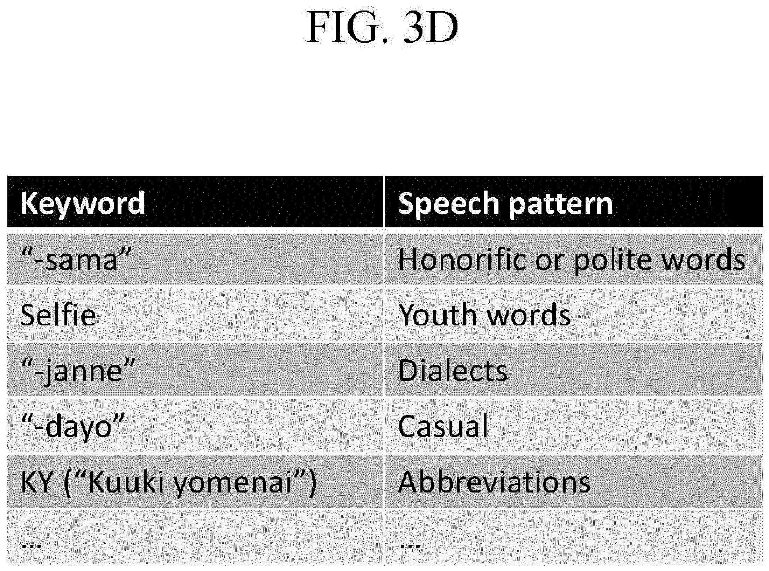

The analysis process for the speech pattern is a process of classifying the keywords extracted by the keyword extraction process into speech patterns to which the keywords belong. This process is performed by referring to a speech pattern dictionary stored in the human relationship database 15. FIG. 3D is a diagram illustrating a part of the speech pattern dictionary used in the analysis process for the speech pattern in step S34 of FIG. 3A. The keywords extracted in the analysis process for the speech pattern are extracted in step S32 of FIG. 3A, but different keywords than the keywords used in the analysis process for the category of conversation content in step S33 are used. As illustrated in the figure, one category of speech pattern is associated with a plurality of keywords. For example, when the conversation voice data includes "-sama", this indicates that conversation classified into "honorific or polite words" is performed. As used herein, the "speech pattern" refers to how to use words and how to say things. As illustrated in FIG. 3D, examples of the speech pattern include honorific or polite words, youth words, dialects, casual speech patterns, and abbreviations.

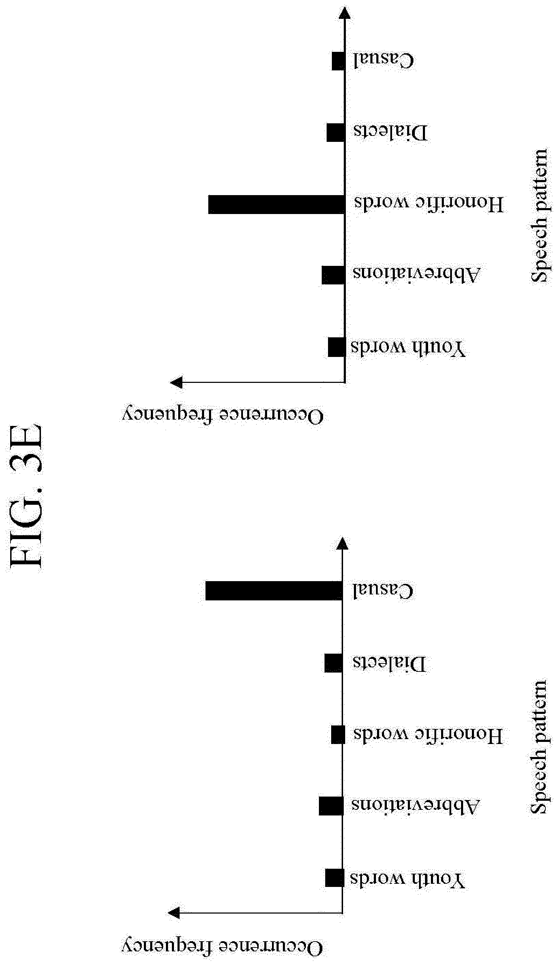

In the analysis process for the speech pattern, as illustrated in FIG. 3E, the occurrence frequency of the category of speech pattern associated with the extracted keyword is calculated for each of one person (e.g., the left-side graph in the figure) and the other person (e.g., the right-side graph in the figure) because the speech patterns may be different between the one person and the other person. FIG. 3E is a set of graphs each illustrating an example of analysis results obtained by the analysis process for the speech pattern in step S34 of FIG. 3A. In the analysis process for the speech pattern, categories of speech patterns having large occurrence frequencies illustrated in the figure are specified, and the specified categories of speech patterns are used in the combining process in step S35 of FIG. 3A.

The combining process is used to quantify the human relationship between the targeted persons by combining numerical values related to the occurrence frequencies calculated through the analysis process for the category of conversation content and the analysis process for the speech pattern and store the quantified human relationship in the human relationship database 15 as a direct human relationship. As previously described, the term "human relationship" as used herein refers to a relationship between a specific person and another specific person determined by the present or past experiences in the social life. Although not particularly limited, in an example for facilitating the understanding of the present invention, human relationships can be classified into relationships among family members such as parents, children, husbands, and wives, relationships among relatives such as cousins, relationships of these families, relatives, and others, relationships among positions in an organization, such as bosses, subordinates, colleagues, classmates, seniors, and juniors in organizations such as companies and schools, relationships among members of the same hobby or entertainment, relationships among boyfriends, girlfriends, lovers, and other friends, and relationships among others.

The quantification of such a direct human relationship is performed by combining numerical values related to the occurrence frequencies calculated through the analysis process for the category of conversation content and the analysis process for the speech pattern. Although not particularly limited, the quantification is performed using a probability value or the like on the basis of a human relationship quantification map, which is preliminarily stored in the human relationship database 15, such that the probability of a relationship between a boss and a subordinate in a company organization is 70%, for example, because the analysis results of the categories of conversation content indicate that the occurrence frequency of the conversation content classified into "business" is high as illustrated in FIG. 3C while the analysis results of speech patterns indicate that the occurrence frequency of the one person's speech pattern being "casual" is high and the occurrence frequency of the other person's speech pattern being "honorific" is high as illustrated in the left and right, respectively, of FIG. 3E. The quantified direct human relationship is accumulated in the human relationship database 15.

On the basis of the quantified direct human relationship, the indirect human relationship estimation section 14 operates to estimate and quantify an indirect human relationship between unanalyzed persons among the persons stored in the human relationship database 15. The above-described direct human relationship is analyzed and quantified on the basis of the actual conversation voice data and therefore referred to as the "direct" human relationship. In contrast, the indirect human relationship estimation section 14 operates to estimate the quantification of the human relationship between persons who have not been actually in conversation with each other on the basis of the data of the quantified direct human relationship. In this sense, the human relationship between persons who have not been actually in conversation with each other is referred to as an "indirect" human relationship.

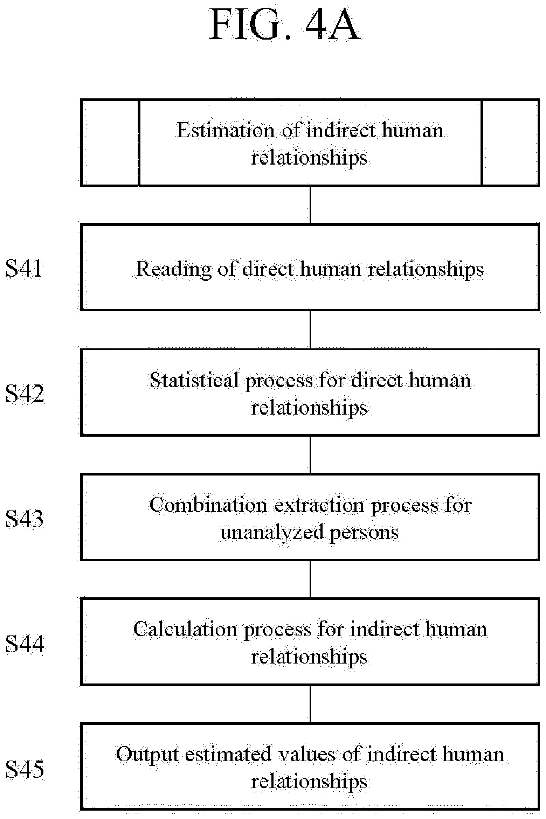

The indirect human relationship estimation section 14 operates to execute a reading process for the direct human relationships (step S41 of FIG. 4A), a statistical process for the direct human relationships (step S42 of FIG. 4A), a combination extraction process for unanalyzed persons (step S43 of FIG. 4A), and a calculation process for estimated values of the indirect human relationships (step S44 of FIG. 4A). The estimated values of the indirect human relationships thus obtained are accumulated in the human relationship database 15 (step S45 of FIG. 4A).

The statistical process for the direct human relationships is performed with consideration for the mutual relationships among values that are quantified by the direct human relationship analysis section 13 and accumulated in the human relationship database 15. Specifically, a combination of three persons whose values of the direct human relationships are known is extracted from the human relationship database 15, and in the values of three human relationships among the extracted three persons, two values are assumed and the remaining one value is recorded. This process is statistically performed on a large number of combinations accumulated in the human relationship database 15 on the assumption that two human relationships are V1 and V2, and a probability value P (V3|V1, V2) for obtaining a remaining one human relationship V3 can thereby be calculated. This probability value P is recorded in the human relationship database 15.

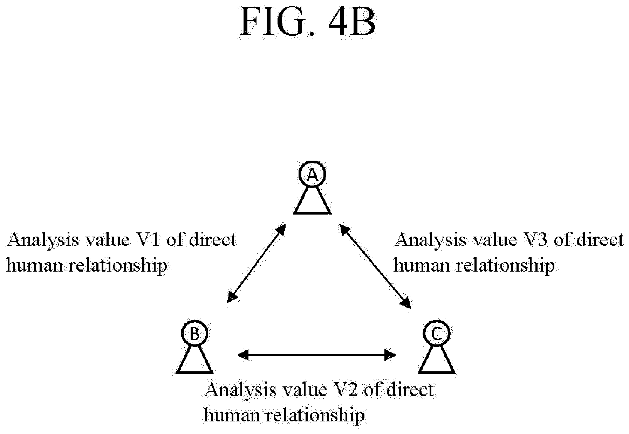

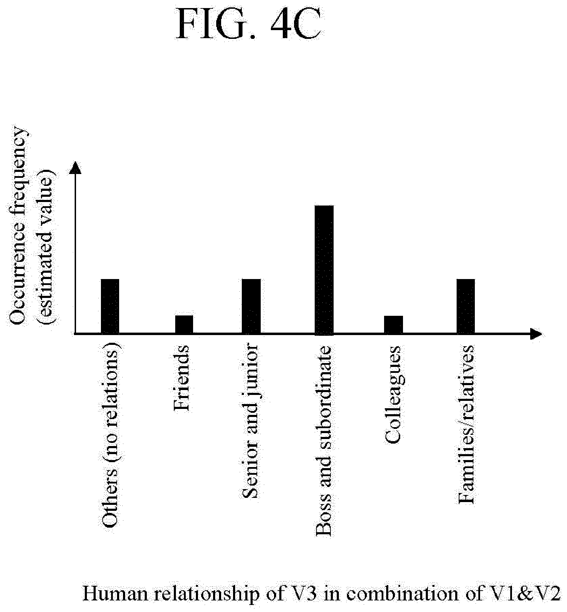

FIG. 4B is a diagram illustrating the human relationships for describing a statistical process for analysis values of the direct human relationships in step S42 of FIG. 4A, and FIG. 4C is a graph illustrating an example of the results obtained by the statistical process for the analysis values of the direct human relationships in step S42 of FIG. 4A. As illustrated in FIG. 4B, it is assumed that, for a combination of a plurality of persons (three persons), a value V1 of the direct human relationship between two persons of a person A and a person B, a value V2 of the direct human relationship between two persons of the person B and a person C, and a value V3 of the direct human relationship between two persons of the person C and the person A are already obtained and accumulated in the human relationship database 15. At this time, on the assumption of the value V1 of the direct human relationship between the persons A and B and the value V2 of the direct human relationship between the persons B and C, which relationship the value V3 of the remaining direct human relationship between the persons C and A represents is analyzed with the occurrence frequencies, as illustrated in FIG. 4C, from these plural data. For example, in the example illustrated in FIG. 4C, a result is obtained in which the value V3 of the direct human relationship between the persons C and A represents the highest probability of being "a boss and a subordinate of a company organization." This occurrence frequency is calculated with the probability P (V3|V1, V2). This means that the value V3 of the direct human relationship between the persons C and A can be calculated with the statistical probability, as illustrated in FIG. 4C, provided that the value V1 of the direct human relationship between the persons A and B and the value V2 of the direct human relationship between the persons B and C are known.

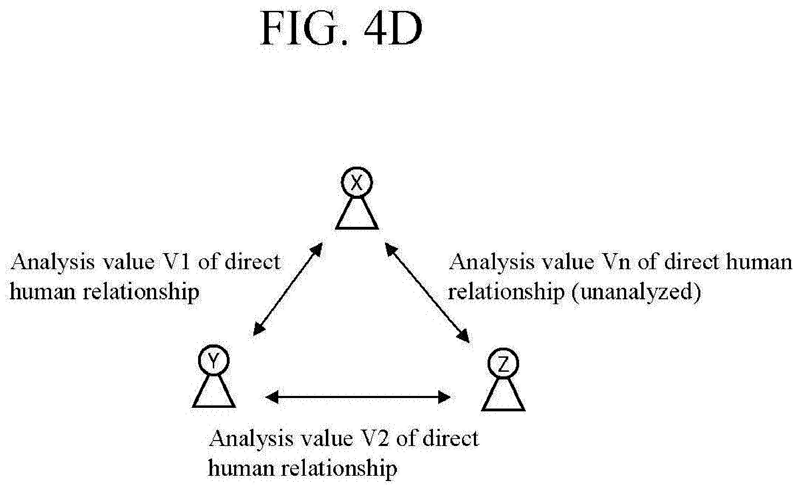

The combination extraction process for unanalyzed persons is used to extract a combination of two persons who have not been actually in direct conversation with each other, as described above. For the two persons, therefore, a quantified value Vn of the direct human relationship is not stored in the human relationship database 15. For example, it is assumed that the two persons are a person Z and a person X, as illustrated in FIG. 4D. FIG. 4D is a diagram illustrating human relationships for describing a calculation process for an estimated value of an indirect human relationship in step S44 of FIG. 4A. In addition to the above, one or more persons whose direct human relationships are quantified with respect to the two extracted persons Z and X are extracted as estimated relaying persons. In the example illustrated in FIG. 4D, the person Y is extracted as an estimated relaying person. The person Y has a known value V1 of the direct human relationship with the person X and also has a known value V2 of the direct human relationship with the person Z.

In the calculation process for an indirect human relationship, the values V1 and V2 of the direct human relationships between the estimated relaying person and the two persons X and Z extracted by the combination extraction process for unanalyzed persons are referred to from the human relationship database 15. Then, the value Vn of the human relationship between the persons on the assumption of the values V1 and V2 of the two human relationships referred to is calculated as the value of an indirect human relationship, that is, as the value which maximizes the probability value V3 obtained by the statistical process in step S42 of FIG. 4A. When a plurality of estimated relaying persons is extracted, a determination may be made on the basis of the product of provability values V3 or majority decision on the provability values V3 for selecting a value that exhibits the maximum probability value. The value Vn calculated as the estimated value of the indirect human relationship is accumulated in the human relationship database 15.

The human relationship storage unit 1B includes the human relationship database 15. As described above, the human relationship database 15 stores the voiceprint data associated with the ID of the owner of each terminal TD, the category dictionary illustrated in FIG. 3B, the speech pattern dictionary illustrated in FIG. 3D, the human relationship quantification map used in the quantification process for the direct human relationships performed by the direct human relationship analysis section 13, the direct human relationships quantified by the direct human relationship analysis section 13, the probability value P (V3|V1, V2) of the remaining one human relationship V3, which is statically processed by the indirect human relationship estimation section 14 on the assumption of the two human relationships V1 and V2, the estimated value of the indirect human relationship estimated by the indirect human relationship estimation section 14, etc.

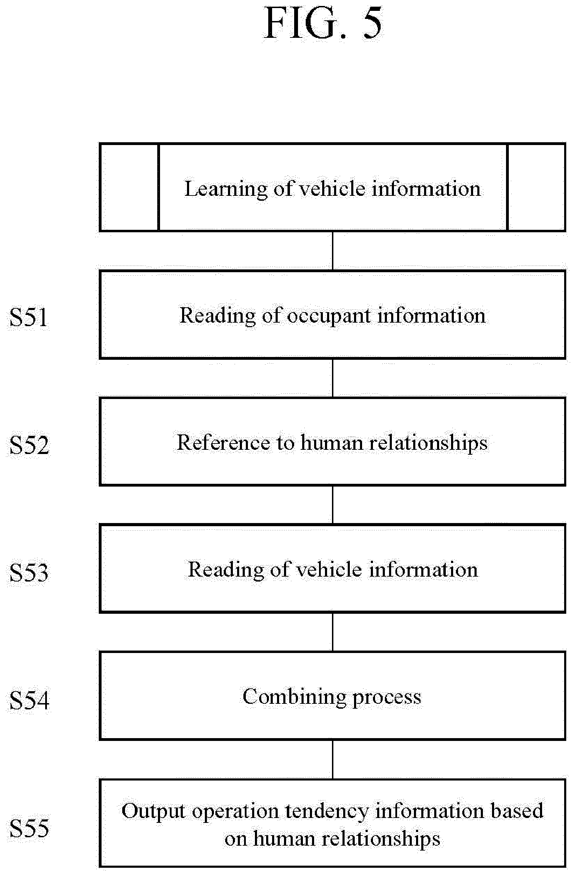

The vehicle information learning unit 1D includes the vehicle information learning section 17, which executes an acquisition process for occupant information (step S51 of FIG. 5), a reference process for human relationships (step S52 of FIG. 5), an acquisition process for vehicle information (step S53 of FIG. 5), and a combining process (step S54 of FIG. 5). Operation tendency information based on the obtained human relationships is accumulated in the operation tendency database 18 (step S55 of FIG. 5).

The acquisition process for occupant information is a process of acquiring information as to who are on board the vehicle. For example, the acquisition process for occupant information can be used to specify an occupant when the occupant connects the terminal TD to some device equipped in the vehicle, specify an occupant by detecting that the positional information of the terminal TD is in close vicinity of the positional information of the vehicle, and/or specify an occupant by face recognition on an image acquired from a camera equipped in the vehicle. The reference process for human relationships is a process of referring to the human relationship database 15 for occupants acquired by the occupant information acquisition process to acquire the value of the human relationship between the occupants.

The acquisition process for vehicle information is a process of acquiring vehicle control information, vehicle state information, and other vehicle information. For example, the acquisition process for vehicle information is used to acquire vehicle information such as a driving operation for the vehicle (such as an accelerator operation, a brake operation, a transmission lever operation, or a steering operation) performed by an occupant, a destination that is set in the navigation device, an operation of the audio device, an operation of the car air conditioner, the current position of the vehicle, the moving trajectory of the vehicle, the current date and time, and the elapsed time after boarding.

The combining process is a process of combining the vehicle information acquired by the acquisition process for vehicle information and the information acquired by the reference process for the human relationships and storing the combined information in the operation tendency database 18 as the operation information on the human relationships. For example, provided that a person A and a person B (the direct human relationship or the indirect human relationship is V1) are on board, when the destination which is set using the navigation device is a specific fishing spot, the human relationship V1 and the destination are stored in the operation tendency database 18 together with the occurrence frequency. Persons A, B, C, etc. may be stored in addition to the human relationships.

The operation tendency storage unit 1E includes the operation tendency database 18 and operates to accumulate the human relationship and the operation information, which are obtained by the vehicle information learning section 17, in association with each other.

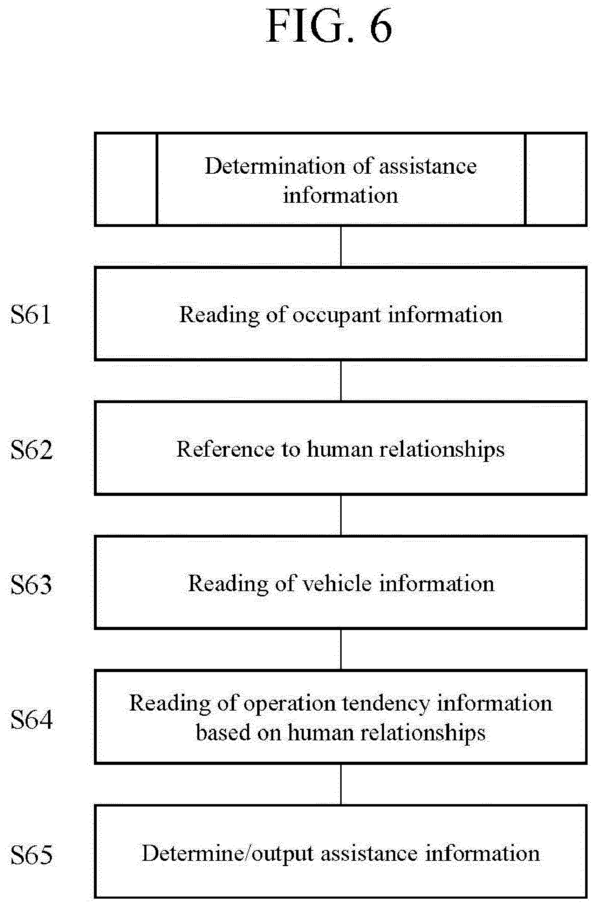

The assistance information determination unit 1C includes the assistance information determination section 16 and operates to specify a plurality of occupants on board the vehicle and determine the assistance information for the vehicle operation, which is determined to be recommended in accordance with the human relationships among the plurality of occupants, on the basis of the direct human relationships and indirect human relationships accumulated in the human relationship database 15. The assistance information determination section 16 operates to execute an acquisition process for occupant information (step S61 of FIG. 6), a reference process for human relationships (step S62 of FIG. 6), an acquisition process for vehicle information (step S63 of FIG. 6), a reference process for operation tendency information (step S64 of FIG. 6), and a determination/output process for assistance information (step S65 of FIG. 6).

The acquisition process for occupant information is a process similar to the acquisition process for occupant information executed by the vehicle information learning section 17 (step S51 of FIG. 5), that is, a process of acquiring information as to who are on board the vehicle. For example, the acquisition process for occupant information can be used to specify an occupant when the occupant connects the terminal TD to some device equipped in the vehicle, specify an occupant by detecting that the positional information of the terminal TD is in close vicinity of the positional information of the vehicle, and/or specify an occupant by face recognition on an image acquired from a camera equipped in the vehicle. The reference process for human relationships is a process similar to the reference process for human relationships executed by the vehicle information learning section 17 (step S52 of FIG. 5), that is, a process of referring to the human relationship database 15 for occupants acquired by the occupant information acquisition process to acquire the value of the human relationship between the occupants.

The acquisition process for vehicle information is a process similar to the acquisition process for vehicle information executed by the vehicle information learning section 17 (step S53 of FIG. 5), that is, a process of acquiring vehicle control information, vehicle state information, and other vehicle information. For example, the acquisition process for vehicle information is used to acquire vehicle information such as a driving operation for the vehicle (such as an accelerator operation, a brake operation, a transmission lever operation, or a steering operation) performed by an occupant, a destination that is set in the navigation device, an operation of the audio device, an operation of the car air conditioner, the current position of the vehicle, the moving trajectory of the vehicle, the current date and time, and the elapsed time after boarding.

The reference process for operation tendency is a process of acquiring information on the operation performed after a determination is made that the values of the human relationships among the occupants are similar to one another or the values of the human relationships among the occupants are similar to those in the vehicle information up to the present time with reference to the operation tendency database 18 having data accumulated by the vehicle information learning section 17. For example, provided that a person A and a person B (the direct human relationship or the indirect human relationship is V1) are on board and the operation tendency database 18 accumulates the operation tendency information that the destination which is set using the navigation device is a specific fishing spot, when the human relationship is V1 or a value similar to V1, the operation tendency information for setting the destination of the navigation device to the specific fishing spot is referred to.

The determination/output process for assistance information is used to determine the assistance information for the vehicle operation, which is determined to be recommended in accordance with the human relationships among a plurality of occupants. As described above, the "recommendation information suitable for the occupant composition" is instruction information for a vehicle or an onboard device for realizing a highly possible or preferred operation that can be considered from the human relationships among the occupants in the vehicle operations performed by one or more occupants. Examples of the recommendation information when occupants A and B composing the occupants are in a human relationship between fishing partners include instruction information for a destination setting operation on the onboard navigation device and instruction information for a channel selection operation on the audio device. The term "assistance" for vehicle operations encompasses not only presenting options to an occupant using a display and/or a speaker when the occupant performs manual operation, but also autonomous (automated) operations performed by the operation assistance device for vehicles 1 without manual operation performed by an occupant.

The flow of information processing according to one or more embodiments of the present invention will then be described. First, on a daily basis, the human relationships between a specific person and other specific persons are analyzed and quantified using the human relationship analysis unit 1A and the terminals TD1, TD2, and TD3 carried by a plurality of persons who can be occupants, and the quantified human relationships are accumulated in the human relationship database 15. Specifically, as illustrated in FIG. 2A, the voice acquisition section 11 operates to execute transmission and reception of information with the plurality of terminals TD via a wireless communication network such as the Internet. In particular, the ID, current position, and collected conversation voice data of each terminal TD are input to the voice acquisition section 11 (step S21 of FIG. 2A). Then, in step S22, the conversation group estimation section 12 operates to estimate who are in conversation with whom and a group (cluster) of persons who are in conversation with one another in terms of the conversation voice data which is input to a specific terminal TD, on the basis of the ID, current position, and collected conversation voice data of each terminal TD which are input to the voice acquisition section 11. In this operation, for a plurality of the conversation voice data that are collected by the terminal TD at the same time, the conversation group estimation section 12 operates to extract combinations in which the positional information associated with the collection of voices indicates a distance of a threshold or less, on the basis of the ID, current position, and collected conversation voice data of each terminal TD which are input to the voice acquisition section 11, thereby executing estimation of a provisional conversation group based on the positional information of the terminal TD.

Then, in step S23 of FIG. 2A, for one or more conversation voice data estimated to belong to the same group which is extracted by the combination extraction process based on the positional information in step S22, the conversation group estimation section 12 operates to extract the conversation voice data in which the overlapping ratio or overlapping time of speech periods is not more than a predetermined threshold and estimate the conversation voice data as that of a conversation group in which the conversation is actually performed. Then, in step S24, the conversation group estimation section 12 operates to specify the conversation voice data of the same conversation group estimated as the above and output the conversation voice data to the direct human relationship analysis section 13 together with the IDs of the terminals TD1 and TD2.

Then, as illustrated in FIG. 3A, in steps S31 to S36, the direct human relationship analysis section 13 operates to: analyze the acquired conversation voice data of the same group for each of the specified speakers to extract a predetermined keyword; specify a speech pattern of each of the speakers on the basis of the keyword for each of the speakers; specify conversation content on the basis of the conversation voice data of a plurality of persons; and analyze and quantify direct human relationships among the plurality of persons from the specified speech pattern and the specified conversation content to obtain the direct human relationships. The quantified direct human relationships are accumulated in the human relationship database 15 in step S36.

Through the processes up to step S36, the quantified values of the human relationships among the persons who have been actually in conversation with one another are accumulated in the human relationship database 15, but there are also human relationships among unanalyzed persons. The indirect human relationship estimation section 14 therefore operates to execute a reading process for the direct human relationships in step S41 of FIG. 4A, execute a statistical process for the direct human relationships in step S42, execute a combination extraction process for the unanalyzed persons in step S43, execute a calculation process for the estimated values of the indirect human relationships in step S44, and accumulate the estimated values thus obtained of the indirect human relationships in the human relationship database 15 in step S45.

On the other hand, the vehicle information learning unit 1D operates to accumulate information as to which kind of vehicle operation is actually performed by the occupant composition including the human relationships, and this information is provided for determining the assistance information for the vehicle operation. That is, as illustrated in FIG. 5, the vehicle information learning section 17 operates to execute an acquisition process for occupant information in step S51, execute a reference process for the human relationships accumulated in the human relationship database 15 in step S52, execute an acquisition process for vehicle information in step S53, execute a combining process in step S54, and accumulate the operation tendency information based on the obtained human relationships in the operation tendency database 18 in step S55.

Then, the assistance information determination unit 1C operates to specify a plurality of occupants on board the vehicle and determine the assistance information for the vehicle operation, which is determined to be recommended in accordance with the human relationships among the plurality of occupants, on the basis of the direct human relationships and indirect human relationships accumulated in the human relationship database 15. Specifically, the assistance information determination section 16 operates to execute an acquisition process for occupant information in step S61 of FIG. 6, execute a reference process for human relationships in step S62, execute an acquisition process for vehicle information in step S63, execute a reference process for operation tendency information in step S64, and execute a determination/output process for assistance information in step S65.

As heretofore described, according to the operation assistance device for vehicles 1 in one or more embodiments of the present invention, the direct human relationships among a plurality of persons who can be occupants are preliminarily accumulated. When a plurality of persons gets on the vehicle, a plurality of occupants on board is specified, and the assistance information for the vehicle operation determined to be recommended in accordance with the human relationships among the plurality of occupants is determined on the basis of the direct human relationships and indirect human relationships accumulated in the human relationship database 15. Thus, the assistance information for appropriate vehicle operations can be provided in a short time after boarding.

According to the operation assistance device for vehicles 1 in one or more embodiments of the present invention, the human relationships among persons who are not actually in conversation with one another are quantified and estimated from the human relationships among persons who have been actually in conversation with one another, and errors can therefore be avoided, such as a lack of the assistance information for the vehicle operation due to inappropriate combination of occupants. Moreover, when estimating the indirect human relationships, the indirect human relationships are obtained by statistically processing the data of the direct human relationships among persons who have been actually in conversation with one another, and the accuracy can therefore be enhanced.

According to the operation assistance device for vehicles 1 in one or more embodiments of the present invention, the actually performed vehicle operation is stored in association with the human relationships at that time, and this is reflected on the assistance information for the vehicle operation; therefore, the assistance information for the vehicle operation determined to be recommended in accordance with the human relationships among the occupants can be made closer to a more realistic operation.

According to the operation assistance device for vehicles 1 in one or more embodiments of the present invention, when the same conversation group is extracted, speakers of a conversation voice data set of a plurality of conversation voice data in which the speech positions are not more than a predetermined distance are grouped into a conversation group. Thus, the accuracy of specifying the conversation group and therefore the accuracy of analyzing the human relationships can be improved.

According to the operation assistance device for vehicles 1 in one or more embodiments of the present invention, when the same conversation group is extracted, speakers of a conversation voice data set of a plurality of conversation voice data in which the speech periods do not overlap for a predetermined time or more are estimated as a conversation group. Thus, the accuracy of specifying the conversation group and therefore the accuracy of analyzing the human relationships can be improved.

According to the operation assistance device for vehicles 1 of the present invention, the conversation voice data of a plurality of persons who can be occupants is detected using a terminal capable of collecting voices even when the persons are not on board the vehicle and, therefore, the conversation voice data of a plurality of persons can be collected on a daily basis.

In the above-described operation assistance device for vehicles 1, the human relationship analysis unit 1A is configured to include the indirect human relationship estimation section 14, but the indirect human relationship estimation section 14 may be omitted as necessary. Moreover, the above-described operation assistance device for vehicles 1 is configured to include the vehicle information learning unit 1D and the operation tendency storage unit 1E and the assistance information for the vehicle operation is determined using the operation tendency information in steps S64 and S65 of FIG. 6, but the vehicle information learning unit 1D and the operation tendency storage unit 1E may be omitted as necessary and the assistance information for the vehicle operation may be determined using only the human relationships accumulated in the human relationship database 15.

The above voice acquisition section 11, conversation group estimation section 12, direct human relationship analysis section 13, and indirect human relationship estimation section 14 correspond to the human relationship analysis unit according to the present invention. The above human relationship database 15 corresponds to the human relationship storage unit according to the present invention. The above assistance information determination section 16 corresponds to the assistance information determination unit according to the present invention. The above vehicle information learning section 17 corresponds to the vehicle information learning unit according to the present invention. The above operation tendency database 18 corresponds to the operation tendency storage unit according to the present invention.

### [Description of Reference Numerals]

- 1: Operation assistance device for vehicles
- 1A: Human relationship analysis unit
- 11: Voice acquisition section
- 12: Conversation group estimation section
- 13: Direct human relationship analysis section
- 14: Indirect human relationship estimation section
- 1B: Human relationship storage unit
- 15: Human relationship database
- 1C: Assistance information determination unit
- 16: Assistance information determination section
- 1D: Vehicle information learning unit
- 17: Vehicle information learning section
- 1E: Operation tendency storage unit
- 18: Operation tendency database
- TD1, TD2, TD3: Terminal
- VH1, VH2: Vehicle
- A, B, C, X, Y, Z: Person (Occupant)
- V1, V2, V3: Analysis value of human relationship

## Claims

1. An operation assistance system for a vehicle comprising an operation assistance device (1) for vehicles and terminals (TD) capable of collecting voices of a plurality of persons who can be the occupants of the vehicle, even when the persons are not on board the vehicle, the operation assistance device (1) comprising:
a human relationship analysis unit (1A);
a human relationship storage unit (IB); and
an assistance information determination unit (1C),
wherein
the operation assistance device (1) is configured to obtain recommendation information suitable for an occupant composition including human relationships and provide the recommendation information for assisting a vehicle operation performed by an occupant,
each terminal (TD) is configured to detect and transmit conversation voice data to the human relationship analysis unit (1A);
the human relationship analysis unit (1A) is configured to:
acquire from the terminals (TD) conversation voice data of a plurality of persons who can be the occupants of the vehicle, to specify speakers;
analyze the acquired conversation voice data for each of the specified speakers to extract a predetermined keyword;
specify a speech pattern of each of the speakers on a basis of the keyword for each of the speakers, the speech pattern referring to how to use words and how to say things;
specify conversation content on a basis of the conversation voice data of the plurality of persons; and
analyze and quantify direct human relationships among the plurality of persons from the specified speech pattern and the specified conversation content,
the human relationship storage unit (1B) is configured to preliminarily accumulate the direct human relationships among the plurality of persons who can be the occupants,
the assistance information determination unit (1C) is configured to specify a plurality of occupants on board the vehicle and determine, on a basis of the direct human relationships accumulated in the human relationship storage unit (1B), assistance information for the vehicle operation determined to be recommended in accordance with the human relationships among the plurality of occupants.

2. The operation assistance system according to claim 1, wherein
the human relationship analysis unit (1A) is configured to estimate and quantify, on a basis of the quantified direct human relationships, indirect human relationships among unanalyzed persons of the persons stored in the human relationship storage unit (1B),
the human relationship storage unit (1B) is configured to further accumulate the indirect human relationships, and
the assistance information determination unit (1C) is configured to determine, on a basis of the direct human relationships and indirect human relationships accumulated in the human relationship storage unit (1B), the assistance information for the vehicle operation determined to be recommended in accordance with the human relationships among the plurality of occupants.

3. The operation assistance system according to claim 2, wherein,
the human relationship analysis unit (1A) is configured to, when estimating and quantifying, on the basis of the quantified direct human relationships, the indirect human relationships among the unanalyzed persons of the persons stored in the human relationship storage unit:
statistically process relationships among a plurality of human relationships V1, V2, and V3 using an already quantified direct human relationship V1 between a first person and a second person, an already quantified direct human relationship V2 between the second person and a third person, and an already quantified direct human relationship V3 between the third person and the first person; and
estimate an unanalyzed human relationship V3' from the already quantified remaining human relationships V1 and V2 and the statistically processed relationships among the human relationships V1, V2, and V3.

4. The operation assistance system according to any one of claims 1 to 3, the operation assistance device further comprising:
a vehicle information learning unit (1D); and
an operation tendency storage unit (1E),
wherein the vehicle information learning unit (1D) is configured to:
specify the plurality of occupants on board the vehicle;
extract the human relationships regarding the plurality of occupants from the human relationship storage unit;
detect operation information regarding the vehicle operation; and
associate the extracted human relationships with the detected operation information,
wherein the operation tendency storage unit (1E) is configured to accumulate the associated human relationships and operation information, and
wherein the assistance information determination unit (1C) is configured to determine the operation information associated with the human relationships accumulated in the operation tendency storage unit (1E) as the assistance information for the vehicle operation determined to be recommended.

5. The operation assistance system according to any one of claims 1 to 4, wherein the human relationship analysis unit (1A) is configured to, when acquiring the conversation voice data of the plurality of persons to specify the speakers:
detect speech positions of a plurality of conversation voice data;
extract, from the plurality of conversation voice data, a conversation voice data set in which the speech positions are not more than a predetermined distance;
group the speakers of the conversation voice data set into a conversation group; and
specify the speakers who belong to the conversation group.

6. The operation assistance system according to any one of claims 1 to 5, wherein the human relationship analysis unit (1A) is configured to, when acquiring the conversation voice data of the plurality of persons to specify the speakers:
detect speech periods of a plurality of conversation voice data;
extract, from the plurality of conversation voice data, a conversation voice data set in which the speech periods do not overlap for a predetermined time or more;
estimate the speakers of the conversation voice data set as a conversation group; and
specify the speakers who belong to the conversation group.

7. An operation assistance method for assisting a vehicle operation using an operation assistance device (1) for vehicles, the operation assistance device comprising a human relationship analysis unit (1A), a human relationship storage unit (1B), and an assistance information determination unit (1C),
the operation assistance method comprising:
operating the operation assistance device (1) to obtain recommendation information suitable for an occupant composition including human relationships and provide the recommendation information for assisting a vehicle operation performed by an occupant,
operating the human relationship analysis unit (1A) to:
acquire conversation voice data of a plurality of persons who can be the occupants of the vehicle, to specify speakers;
analyze the acquired conversation voice data for each of the specified speakers to extract a predetermined keyword;
specify a speech pattern of each of the speakers on a basis of the keyword for each of the speakers, the speech pattern referring to how to use words and how to say things;
specify conversation content on a basis of the conversation voice data of the plurality of persons; and
analyze and quantify direct human relationships among the plurality of persons from the specified speech pattern and the specified conversation content,
operating the human relationship storage unit (1B) to preliminarily accumulate the direct human relationships among the plurality of persons who can be the occupants; and
operating the assistance information determination unit (1C) to specify a plurality of occupants on board the vehicle and determine, on a basis of the direct human relationships accumulated in the human relationship storage unit (1B), assistance information for the vehicle operation determined to be recommended in accordance with the human relationships among the plurality of occupants,
wherein the conversation voice data of the plurality of persons who can be the occupants is detected by terminals (TD) capable of collecting voices even when the persons are not on board the vehicle, and
the detected conversation voice data is transmitted to the human relationship analysis unit (1A).

## Patentansprüche

1. Fahrzeugbetriebsassistenzsystem, das eine Betriebsassistenzvorrichtung (1) für Fahrzeuge und Terminals (TD) aufweist, die dazu ausgebildet ist, Stimmen einer Mehrzahl von Personen aufzunehmen, die Insassen des Fahrzeugs sein können, selbst wenn sich die Personen nicht in dem Fahrzeug befinden; wobei die Betriebsassistenzvorrichtung (1) aufweist:
eine Beziehungsanalyseeinheit (1A) zur Analyse zwischenmenschlicher Beziehungen;
eine Beziehungsspeichereinheit (1B) zum Speichern zwischenmenschlicher Beziehungen; und
eine Assistenzinformationsbestimmungseinheit (1C);
wobei die Betriebsassistenzvorrichtung (1) dazu ausgebildet ist, Empfehlungsinformationen, die für eine Insassenzusammensetzung geeignet sind, die zwischenmenschliche Beziehungen umfasst, zu erhalten und die Empfehlungsinformationen zur Unterstützung eines von einem Insassen durchgeführten Fahrzeugbetriebs bereitzustellen,
wobei jedes Terminal (TD) dazu ausgebildet ist, Konversationssprachdaten zu erfassen und an die Beziehungsanalyseeinheit (1A) zu übertragen;
wobei die Beziehungsanalyseeinheit (1A) dazu ausgebildet ist:
von den Terminals (TD) Konversationssprachdaten einer Mehrzahl von Personen, die Insassen des Fahrzeugs sein können, zu erfassen, um sprechende Personen zu spezifizieren;
die erfassten Konversationssprachdaten für jede der spezifizierten sprechenden Personen zu analysieren, um ein bestimmtes Stichwort zu extrahieren;
ein Sprechmuster jeder der sprechenden Personen auf der Basis des Stichworts für jede der sprechenden Personen zu spezifizieren, wobei sich das Sprachmuster darauf bezieht, wie Wörter verwendet werden und wie etwas gesagt wird;
Konversationsinhalte auf der Basis der Konversationssprachdaten der Mehrzahl von Personen zu spezifizieren; und
direkte zwischenmenschliche Beziehungen zwischen der Mehrzahl von Personen anhand des spezifizierten Sprachmusters und des spezifizierten Gesprächsinhalts zu analysieren und zu quantifizieren,
wobei die Beziehungsspeichereinheit (1B) dazu ausgebildet ist, die direkten zwischenmenschlichen Beziehungen zwischen der Mehrzahl von Personen, die Insassen des Fahrzeugs sein können, vorübergehend zu speichern,
wobei die Assistenzinformationsbestimmungseinheit (1C) dazu ausgebildet ist, eine Mehrzahl von Insassen in dem Fahrzeug zu spezifizieren und auf der Basis der in der Beziehungseinheit (1B) akkumulierten zwischenmenschlichen Beziehungen Assistenzinformationen für den Fahrzeugbetrieb zu bestimmen, die entsprechend der zwischenmenschlichen Beziehungen zwischen der Mehrzahl von Insassen als empfehlenswert befunden wurden.

2. Betriebsassistenzsystem gemäß Anspruch 1, wobei die Beziehungsanalyseeinheit (1A) dazu ausgebildet ist, auf der Basis der quantifizierten direkten zwischenmenschlichen Beziehungen indirekte zwischenmenschliche Beziehungen zwischen den nicht analysierten Personen der in der Beziehungsspeichereinheit (1B) gespeicherten Personen zu berechnen und zu quantifizieren, wobei die Beziehungsspeichereinheit (1B) dazu ausgebildet ist, die indirekten zwischenmenschlichen Beziehungen ebenfalls zu akkumulieren, und
die Assistenzinformationsbestimmungseinheit (1C) dazu ausgebildet ist, auf der Basis der in der Beziehungsspeichereinheit (1B) akkumulierten direkten und indirekten zwischenmenschlichen Beziehungen die Assistenzinformationen für den Fahrzeugbetrieb zu bestimmen, die entsprechend der zwischenmenschlichen Beziehungen zwischen der Mehrzahl von Insassen als empfehlenswert befunden wurden.

3. Betriebsassistenzsystem gemäß Anspruch 2, wobei die Beziehungsanalyseeinheit (1A) bei der Berechnung und Quantifizierung der indirekten zwischenmenschlichen Beziehungen zwischen den nicht analysierten Personen der Personen, die in der Beziehungsspeichereinheit gespeichert sind, auf der Basis der quantifizierten direkten zwischenmenschlichen Beziehungen dazu ausgebildet ist:
Beziehungen zwischen einer Mehrzahl von zwischenmenschlichen Beziehungen V1, V2 und V3 statistisch zu verarbeiten unter Verwendung einer bereits quantifizierten direkten zwischenmenschlichen Beziehung V1 zwischen einer ersten Person und einer zweiten Person, einer bereits quantifizierten direkten zwischenmenschlichen Beziehung V2 zwischen der zweiten Person und einer dritten Person und einer bereits quantifizierten direkten zwischenmenschlichen Beziehung V3 zwischen der dritten Person und der ersten Person; und
eine nicht analysierte zwischenmenschliche Beziehung V3' aus den bereits quantifizierten verbleibenden zwischenmenschlichen Beziehungen V1 und V2 und
den statistisch verarbeiteten Beziehungen aus den menschlichen Beziehungen V1, V2 und V3 zu berechnen.

4. Betriebsassistenzsystem gemäß einem der Ansprüche 1 bis 3, wobei die Betriebsassistenzvorrichtung des Weiteren aufweist:
eine Fahrzeuginformationslerneinheit (1D); und
eine Betriebstendenzspeichereinheit (1E),
wobei die Fahrzeuginformationslerneinheit (1D) dazu ausgebildet ist:
die Mehrzahl von Insassen in dem Fahrzeug zu spezifizieren;
die zwischenmenschlichen Beziehung in Bezug auf die Mehrzahl von Insassen aus der Beziehungsspeichereinheit zu extrahieren;
Betriebsinformationen bezüglich des Fahrzeugbetriebs zu detektieren; und
die extrahierten zwischenmenschlichen Beziehungen mit den detektierten Betriebsinformationen zu assoziieren,
wobei die Betriebstendenzspeichereinheit (1E) dazu ausgebildet ist, die assoziierten menschlichen Beziehungen und Betriebsinformationen zu akkumulieren, und
wobei die Assistenzinformationsbestimmungseinheit (1C) dazu ausgebildet ist, die Betriebsinformationen zu bestimmen, die mit den zwischenmenschlichen Beziehungen assoziiert sind, die in der Betriebstendenzspeichereinheit (1E) akkumuliert sind, als Assistenzinformationen für den Fahrzeugbetrieb, die als empfehlenswert befunden wurden.

5. Betriebsassistenzsystem gemäß einem der Ansprüche 1 bis 4,
wobei die Beziehungsanalyseeinheit (1A) beim Erfassen der Konversationssprachdaten der Mehrzahl von Personen zur Spezifizierung der sprechenden Personen dazu ausgebildet ist:
die Sprechpositionen einer Mehrzahl von Konversationssprachdaten zu erfassen;
einen Konversationssprachdatensatz, bei dem sich die Sprechpositionen nicht weiter als bis zu einem vorbestimmten Abstand voneinander befinden, aus der Mehrzahl von Konversationsdaten zu extrahieren;
die sprechenden Personen des Konversationssprachdatensatzes in eine Konversationsgruppe zu gruppieren; und
die zu der Konversationsgruppe gehörenden sprechenden Personen zu spezifizieren.

6. Betriebsassistenzsystem gemäß einem der Ansprüche 1 bis 5, wobei die Beziehungsanalyseeinheit (1A) beim Erfassen der Konversationssprachdaten der Mehrzahl von Personen zur Spezifizierung der sprechenden Personen dazu ausgebildet ist:
Sprachperioden einer Mehrzahl von Konversationssprachdaten zu erfassen;
aus der Mehrzahl von Konversationssprachdaten einen Konversationssprachdatensatz zu extrahieren, in welchem sich die Sprachperioden über einen vorbestimmten Zeitraum oder mehr nicht überlappen;
die sprechenden Personen des Konversationssprachdatensatzes als Konversationsgruppe zu bestimmen; und
die zu der Konversationsgruppe gehörenden sprechenden Personen zu spezifizieren.

7. Betriebsassistenzverfahren zur Unterstützung eines Fahrzeugbetriebs unter Verwendung einer Fahrzeugbetriebsassistenzvorrichtung (1), wobei die Betriebsassistenzvorrichtung eine Beziehungsanalyseeinheit (1A) zur Analyse zwischenmenschlicher Beziehungen, eine Beziehungsspeichereinheit (1B) zum Speichern zwischenmenschlicher Beziehungen und eine Assistenzinformationsbestimmungseinheit (1C) aufweist, wobei das Betriebsassistenzverfahren aufweist:
Betreiben der Betriebsassistenzvorrichtung (1) zum Erfassen von für eine Insassenzusammensetzung geeigneten Empfehlungsinformationen, die zwischenmenschliche Beziehungen umfassen, und zum Bereitstellen der Empfehlungsinformationen zur Unterstützung eines von einem Insassen durchgeführten Fahrzeugbetriebs,
Betreiben der Beziehungsanalyseeinheit (1A) zum:
Erfassen von Konversationssprachdaten einer Mehrzahl von Personen, die Insassen des Fahrzeugs sein können, um sprechende Personen zu spezifizieren;
Analysieren der erfassten Konversationssprachdaten für jede der spezifizierten sprechenden Personen, um ein bestimmtes Stichwort zu extrahieren;
Spezifizieren eines Sprechmusters jeder der sprechenden Personen auf der Basis des Stichworts für jede der sprechenden Personen, wobei sich das Sprachmuster darauf bezieht, wie Wörter verwendet werden und wie etwas gesagt wird;
Spezifizieren eines Konversationsinhalts auf der Basis der Konversationssprachdaten der Mehrzahl von Personen; und
Analysieren und Quantifizieren direkter zwischenmenschlicher Beziehungen zwischen der Mehrzahl von Personen anhand des spezifizierten Sprachmusters und des spezifizierten Gesprächsinhalts,
Betreiben der Beziehungsspeichereinheit (1B) zum vorübergehenden Akkumulieren der direkten zwischenmenschlichen Beziehungen zwischen der Mehrzahl von Personen, die Insassen des Fahrzeugs sein können; und
Betreiben der Assistenzinformationsbestimmungseinheit (1C) zum Spezifizieren einer Mehrzahl von Insassen in dem Fahrzeug und Bestimmen auf der Basis der in der Beziehungseinheit (1B) akkumulierten zwischenmenschlichen Beziehungen von Assistenzinformationen für den Fahrzeugbetrieb, die entsprechend der zwischenmenschlichen Beziehungen zwischen der Mehrzahl von Personen als empfehlenswert befunden wurden,
wobei die Konversationssprachdaten der Mehrzahl von Personen, die Insassen des Fahrzeugs sein können, von Terminals (TD) erfasst werden, die in der Lage sind, Stimmen zu erfassen, selbst wenn die Personen sich nicht in dem Fahrzeug befinden, und
die erfassten Konversationssprachdaten an die Beziehungsanalyseeinheit (1A) übertragen werden.

## Revendications

1. Système d'assistance au fonctionnement pour un véhicule comprenant un dispositif d'assistance au fonctionnement (1) pour des véhicules et des terminaux (TD) capables de recueillir des voix d'une pluralité de personnes qui peuvent être les occupants du véhicule, même lorsque les personnes ne sont pas à bord du véhicule, le dispositif d'assistance au fonctionnement (1) comprenant :
une unité d'analyse des relations humaines (1A) ;
une unité de stockage des relations humaines (1B) ; et
une unité de détermination des informations d'assistance (1C),
dans lequel
le dispositif d'assistance au fonctionnement (1) est configuré pour obtenir des informations de recommandation convenant à une composition d'occupants comprenant des relations humaines et fournir les informations de recommandation pour assister le fonctionnement d'un véhicule effectué par un occupant,
chaque terminal (TD) est configuré pour détecter et transmettre des données vocales de conversation à l'unité d'analyse des relations humaines (1A) ;
l'unité d'analyse des relations humaines (1A) est configurée pour :
acquérir à partir des terminaux (TD) des données vocales de conversation d'une pluralité de personnes qui peuvent être les occupants du véhicule, pour spécifier des locuteurs ;
analyser les données vocales de conversation acquises pour chacun des locuteurs spécifiés afin d'extraire un mot-clé prédéterminé ;
spécifier un modèle de discours de chacun des locuteurs sur la base du mot-clé de chacun des locuteurs, le modèle de discours se référant à la manière d'utiliser les mots et de dire les choses ;
spécifier le contenu de la conversation sur la base des données vocales de la conversation de la pluralité de personnes ; et
analyser et quantifier les relations humaines directes entre la pluralité de personnes à partir du modèle de discours spécifié et du contenu de conversation spécifié,
l'unité de stockage des relations humaines (1B) est configurée pour accumuler de manière préliminaire les relations humaines directes parmi la pluralité de personnes qui peuvent être les occupants,
l'unité de détermination d'informations d'assistance (1C) est configurée pour spécifier une pluralité d'occupants à bord du véhicule et déterminer, sur la base des relations humaines directes accumulées dans l'unité de stockage de relations humaines (1B), des informations d'assistance pour le fonctionnement du véhicule déterminées pour être recommandées en fonction des relations humaines parmi la pluralité d'occupants.

2. Système d'assistance au fonctionnement selon la revendication 1, dans lequel :
l'unité d'analyse des relations humaines (1A) est configurée pour estimer et quantifier, sur la base des relations humaines directes quantifiées, des relations humaines indirectes parmi des personnes non analysées des personnes stockées dans l'unité de stockage des relations humaines (1B),
l'unité de stockage des relations humaines (1B) est configurée pour accumuler, en outre, les relations humaines indirectes, et
l'unité de détermination d'informations d'assistance (1C) est configurée pour déterminer, sur la base des relations humaines directes et des relations humaines indirectes accumulées dans l'unité de stockage des relations humaines (1B), les informations d'assistance pour le fonctionnement du véhicule déterminées pour être recommandées en fonction des relations humaines parmi la pluralité d'occupants.

3. Système d'assistance au fonctionnement selon la revendication 2, dans lequel :
l'unité d'analyse des relations humaines (1A) est configurée, lors de l'estimation et de la quantification, sur la base des relations humaines directes quantifiées, des relations humaines indirectes parmi les personnes non analysées des personnes stockées dans l'unité de stockage de relations humaines, pour :
traiter statistiquement les relations parmi une pluralité de relations humaines VI, V2 et V3 en utilisant une relation humaine directe VI déjà quantifiée entre une première personne et une deuxième personne, une relation humaine directe V2 déjà quantifiée entre la deuxième personne et une troisième personne, et une relation humaine directe V3 déjà quantifiée entre la troisième personne et la première personne ; et
estimer une relation humaine non analysée V3' à partir des relations humaines restantes VI et V2 déjà quantifiées et des relations traitées statistiquement parmi les relations humaines VI, V2 et V3.

4. Système d'assistance au fonctionnement selon l'une quelconque des revendications 1 à 3, le dispositif d'assistance au fonctionnement comprenant, en outre :
une unité d'apprentissage d'informations sur le véhicule (1D) ; et
une unité de stockage de tendance de fonctionnement (1E),
dans lequel l'unité d'apprentissage d'informations sur le véhicule (1D) est configurée pour :
spécifier la pluralité d'occupants à bord du véhicule ;
extraire les relations humaines concernant la pluralité d'occupants à partir de l'unité de stockage des relations humaines ;
détecter des informations de fonctionnement concernant le fonctionnement du véhicule ; et
associer les relations humaines extraites aux informations sur les opérations détectées,
dans lequel l'unité de stockage de tendance de fonctionnement (1E) est configurée pour accumuler les relations humaines et les informations de fonctionnement associées, et
dans lequel l'unité de détermination d'informations d'assistance (1C) est configurée pour déterminer les informations de fonctionnement associées aux relations humaines accumulées dans l'unité de stockage de tendance de fonctionnement (1E) en tant qu'informations d'assistance pour le fonctionnement du véhicule, déterminées pour être recommandées.

5. Système d'assistance au fonctionnement selon l'une quelconque des revendications 1 à 4, dans lequel l'unité d'analyse des relations humaines (1A) est configurée, lors de l'acquisition des données vocales de conversation de la pluralité de personnes pour spécifier les locuteurs, pour :
détecter les positions de discours d'une pluralité de données vocales de conversation ;
extraire, à partir de la pluralité de données vocales de conversation, un ensemble de données vocales de conversation dans lequel les positions de discours ne sont pas supérieures à une distance prédéterminée ;
regrouper les locuteurs de l'ensemble de données vocales de conversation dans un groupe de conversation ; et
spécifier les locuteurs qui appartiennent au groupe de conversation.

6. Système d'assistance au fonctionnement selon l'une quelconque des revendications 1 à 5,
dans lequel l'unité d'analyse des relations humaines (1A) est configurée, lors de l'acquisition des données vocales de conversation de la pluralité de personnes pour spécifier les locuteurs, pour :
détecter des périodes de discours d'une pluralité de données vocales de conversation ;
extraire, à partir de la pluralité de données vocales de conversation, un ensemble de données vocales de conversation dans lequel les périodes de discours ne se chevauchent pas pendant un temps prédéterminé ou plus ;
estimer les locuteurs de l'ensemble de données vocales de conversation comme un groupe de conversation ; et
spécifier les locuteurs qui appartiennent au groupe de conversation.

7. Procédé d'assistance au fonctionnement pour assister le fonctionnement d'un véhicule en utilisant un dispositif d'assistance au fonctionnement (1) pour véhicules, le dispositif d'assistance au fonctionnement comprenant une unité d'analyse des relations humaines (1A), une unité de stockage des relations humaines (1B), et une unité de détermination d'informations d'assistance (1C),
le procédé d'assistance au fonctionnement comprenant :
faire fonctionner le dispositif d'assistance au fonctionnement (1) pour obtenir des informations de recommandation adaptées à une composition d'occupants incluant des relations humaines et fournir les informations de recommandation pour assister le fonctionnement d'un véhicule effectué par un occupant,
faire fonctionner l'unité d'analyse des relations humaines (1A) pour :
acquérir des données vocales de conversation d'une pluralité de personnes qui peuvent être les occupants du véhicule, pour spécifier des locuteurs ;
analyser les données vocales de conversation acquises pour chacun des locuteurs spécifiés afin d'extraire un mot-clé prédéterminé ;
spécifier un modèle de discours de chacun des locuteurs sur la base du mot-clé de chacun des locuteurs, le modèle de discours se référant à la manière d'utiliser les mots et de dire les choses ;
spécifier le contenu de la conversation sur la base des données vocales de la conversation de la pluralité de personnes ; et
analyser et quantifier les relations humaines directes entre la pluralité de personnes à partir du modèle de discours spécifié et du contenu de conversation spécifié,
faire fonctionner l'unité de stockage des relations humaines (1B) pour accumuler de manière préliminaire les relations humaines directes parmi la pluralité de personnes qui peuvent être les occupants ; et
faire fonctionner l'unité de détermination d'informations d'assistance (1C) pour spécifier une pluralité d'occupants à bord du véhicule et déterminer, sur la base des relations humaines directes accumulées dans l'unité de stockage des relations humaines (1B), des informations d'assistance pour le fonctionnement du véhicule déterminées pour être recommandées en fonction des relations humaines parmi la pluralité d'occupants,
dans lequel les données vocales de conversation de la pluralité de personnes qui peuvent être les occupants sont détectées par des terminaux (TD) capables de recueillir des voix même lorsque les personnes ne sont pas à bord du véhicule, et
les données vocales de conversation détectées sont transmises à l'unité d'analyse de relation humaine (1A).
